# EUROPÄISCHE PATENTSCHRIFT

(11) **EP 3 462 433 B1**
(45) Veröffentlichungstag und Bekanntmachung des Hinweises auf die Patenterteilung: **14.07.2021**
(21) Anmeldenummer: 18197376.9
(22) Anmeldetag: 27.09.2018
(51) Int. Cl.: G09F 27/00, G09F 9/35, G09F 9/30, G08B 7/06, G02F 1/133

(54) **SICHERHEITS- ODER RETTUNGSZEICHENLEUCHTE UND SICHERHEITSBELEUCHTUNGSANLAGE**
SAFETY OR RESCUE SIGNAL LIGHT AND SAFETY LIGHTING SYSTEM
LUMINAIRES POUR SIGNAUX DE SÉCURITÉ OU D'URGENCE ET INSTALLATION D'ÉCLAIRAGE DE SÉCURITÉ

(30) Priorität: 27.09.2017 EP 17193516
(43) Veröffentlichungstag der Anmeldung: 03.04.2019
(73) Patentinhaber: DIN-Dietmar Nocker Facilitymanagement GmbH, 4030 Linz (AT)
(72) Erfinder:
(74) Vertreter: Jell, Friedrich

(56) Entgegenhaltungen:
- WO-A1-2011/054495
- DE-A1- 10 244 792
- DE-A1-102015 218 161
- US-A1- 2008 204 267
- US-A1- 2013 278 868

## Beschreibung

Die Erfindung betrifft eine Sicherheits- oder Rettungszeichenleuchte mit einem elektronischen Display, welches Zellen, insbesondere LCD-Zellen, aufweist und damit an der Sicherheits- oder Rettungszeichenleuchte einen ersten, optisch veränderbaren Anzeigebereich zur Darstellung von, insbesondere sicherheitskritischer, Information ausbildet, und mit einem Sensor.

Sicherheits- oder Rettungszeichenleuchten mit einem Display, das sicherheitskritische Informationen darstellen, bedürfen einer hohen Sicherheitsanforderungsstufe. Dies gilt auch für Rettungszeichenleuchten mit Anzeigen elektronischer Art (WO2011/054495A1), deren Zellen einen optisch veränderbaren Anzeigebereich an der Rettungszeichenleuchte ausbilden - um derart unterschiedliche sicherheitskritische Informationen anzeigen zu können. Eine nicht funktionstüchtige Sicherheits- oder Rettungszeichenleuchte bzw. deren falsche Wiedergabe von sicherheitskritischen Informationen stellt klarerweise ein hohes Gefährdungspotential für zu evakuierende Personen dar.

Die Erfindung hat sich daher die Aufgabe gestellt, eine Sicherheits- oder Rettungszeichenleuchte mit einem elektronischen Display der eingangs geschilderten Art derart konstruktiv zu verändern, dass trotz eines optisch veränderbaren Anzeigebereichs der Sicherheits- oder Rettungszeichenleuchte eine hohe Sicherheitsanforderungsstufe gewährleistet werden kann.

Die Erfindung löst die gestellte Aufgabe durch die Merkmale des Anspruchs 1.

Bilden von den Zellen des Displays erste Zellen den ersten Anzeigebereich und mindestens eine zweite Zelle einen vom ersten Anzeigebereich getrennt angeordneten Kontrollbereich aus, welcher Kontrollbereich bei Sicht auf das Display visuell nicht erkennbar ist, steht am Display mindestens eine Zelle - nämlich jene im Kontrollbereich - zur Verfügung, welche für die Darstellung von sicherheitskritischer Information nicht benötigt wird. Damit kann sich die Möglichkeit eröffnen, das elektronische Display ohne visuelle Störung zu überprüfen. Zu diesem Zweck ist der Sensor mit der zweiten Zelle optisch gekoppelt. Anhand der Sensordaten dieses Sensors kann der erste Anzeigebereich der Anzeige auf Funktionstüchtigkeit überwacht werden, wodurch die Verlässlichkeit in der Anzeige von, insbesondere sicherheitskritischer, Information beurteilt werden kann. Die erfindungsgemäße Sicherheits- oder Rettungszeichenleuchte kann damit eine besonders hohe Sicherheitsanforderungsstufe gewährleisten und ist daher besonders als Sicherheits- oder Rettungszeichenleuchten mit einer elektronischen Anzeige geeignet.

Die Konstruktion kann weiter vereinfacht werden, wenn der Sensor auf dem Display über der zweiten Zelle vorgesehen ist. Zudem kann dies dazu beitragen, dass der Kontrollbereich bei Sicht auf das Display visuell nicht erkennbar ist.

Die Sicherheits- oder Rettungszeichenleuchte kann konstruktiv kompakt ausgeführt sein, wenn der Kontrollbereich in einem seitlichen Randbereich des Displays vorgesehen ist.

Vorzugsweise ist die zweite Zelle lichtundurchlässig abgedeckt, wodurch diese Zelle bei Sicht auf das Display zuverlässig visuell nicht erkennbar ist. Auch kann damit eine eventuelle Beeinträchtigung der Information des ersten Anzeigebereichs standfest vermieden werden. Vorzugsweise ist die die zweite Zelle von einer Blende und/oder vom Sensor lichtundurchlässig abgedeckt, um die Verlässlichkeit der Sicherheits- oder Rettungszeichenleuchte in Bezug auf die angezeigte Information weiter zu erhöhen.

Die konstruktiven Abmessungen der Sicherheits- oder Rettungszeichenleuchte können weiter verringert werden, wenn die Blende wenigstens abschnittsweise den Seitenrand der Sicherheits- oder Rettungszeichenleuchte ausbildet. Zudem kann die Blende als mechanischer Schutz dienen und damit die mechanische Belastbarkeit der Sicherheits- oder Rettungszeichenleuchte erhöhen.

Die Zuverlässigkeit in der Anzeige von Information kann weiter erhöht werden, wenn die ersten Zellen Anzeigesegmente im ersten Anzeigebereich ausbilden. Des Weiteren kann damit die Lesbarkeit der Anzeige verbessert und so sicherheitskritische Informationen deutlicher dargestellt werden. Die erfindungsgemäße Sicherheits- oder Rettungszeichenleuchte kann damit hohe Sicherheitsanforderungsstufen erfüllen.

Die Verlässlichkeit der, von der erfindungsgemäßen Sicherheits- oder Rettungszeichenleuchte angezeigten Information kann weiter erhöht werden, wenn die Sicherheits- oder Rettungszeichenleuchte zusätzlich zum ersten Anzeigebereich einen zweiten, optisch unveränderbaren Anzeigebereich zur Darstellung von, insbesondere sicherheitskritischer, Information aufweist.

Bildet von den Zellen des Displays mindestens eine dritte Zelle den zweiten Anzeigebereich aus, kann damit ein optisch unveränderbarer Bereich der Anzeige geschaffen werden. Zudem kann dies die Konstruktion der Sicherheits- oder Rettungszeichenleuchte vereinfachen und auch einer gleichmäßigeren Ausleuchtung der Sicherheits- oder Rettungszeichenleuchte dienlich sein.

Vorzugsweise bilden mehrere dritte Zellen zweite Anzeigesegmente im zweiten Anzeigebereich, um den optischen Eindruck der Sicherheits- oder Rettungszeichenleuchte über die gesamte Sichtseite zu vereinheitlichen.

Des Weiteren ist vorstellbar, dass der zweite Anzeigebereich ein Piktogramm aufweist, insbesondere davon gebildet wird, was in diesem Bereich der elektronischen Anzeige gegebenenfalls Zellen erübrigt und damit die Konstruktion der Sicherheits- oder Rettungszeichenleuchte weiter vereinfachen kann.

Vorzugsweise ist der zweite Anzeigebereich zwischen Kontrollbereich und ersten Anzeigebereich vorgesehen, um durch diese örtliche Trennung eine Beeinträchtigung des optischen Sensors in seiner Datenaufnahme durch die Abstrahlung des ersten Anzeigebereichs zu verringern. Funktionsüberwachung und damit Zuverlässigkeit der Sicherheits- oder Rettungszeichenleuchte sind auf diese Weise weiter verbesserbar.

Schließen der erste und zweite Anzeigebereich aneinander an, ist eine in den Abmessungen kompakte Sicherheits- oder Rettungszeichenleuchte geschaffen.

Die Konstruktion der Sicherheits- oder Rettungszeichenleuchte kann zusätzlich vereinfacht werden, wenn diese eine dem Display zugehörige Ansteuerlogik aufweist, welche die ersten und zweiten Zellen der Anzeige treibt. Zudem kann der Sensor durch eine gemeinsame Ansteuerlogik der Zellen auch die Ansteuerlogik auf Funktionsfehler überwachen.

Die Konstruktion der Sicherheits- oder Rettungszeichenleuchte kann vereinfacht werden, wenn der Sensor auf einem Träger vorgesehen ist, der auf dem Display angeordnet im Bereich der zweiten Zelle eine Aussparung aufweist, über die der Sensor mit der zweiten Zelle optisch gekoppelt ist.

Die Konstruktion der Sicherheits- oder Rettungszeichenleuchte kann weiter vereinfacht werden, wenn sich das elektronische Display gegebenenfalls mit einer Einfassung über die gesamte Sichtseite der Sicherheits- oder Rettungszeichenleuchte erstreckt.

Ist aufgrund des, insbesondere codiert dargestellten, Zustands der zweiten Zellen eine eindeutige Zuordnung der von den ersten Zellen dargestellten Information möglich, kann die Funktionsfähigkeit des elektronischen Displays auf Funktionstüchtigkeit überprüft werden. Eine hohe Sicherheitsanforderungsstufe kann damit gewährleistet werden. Vorzugsweise wird die von den ersten Zellen darstellbare Information von den zweiten Zellen codiert, nämlich binärkodiert, dargestellt, was die Anzahl an zweiten Zellen minimiert und damit die Konstruktionsverhältnisse zu vereinfachen.

Vorzugsweise ist 2 hoch der Anzahl an zweiten Zellen ≥ der Anzahl an ersten Zellen, um so die Funktionstüchtigkeit jeder zweiten Zelle überprüfen zu können, was besonders bei der Anzeige von sicherheitskritischen Informationen von Bedeutung sein kann.

Besonders kann sich die erfindungsgemäße Sicherheits- oder Rettungszeichenleuchte für eine Not- oder Sicherheitsbeleuchtungsanlage eignen.

In den Figuren ist beispielsweise der Erfindungsgegenstand anhand einer Ausführungsvariante näher dargestellt. Es zeigen
- Fig. 1: eine Seitenansicht auf eine Sichtseite einer Sicherheits- oder Rettungszeichenleuchte mit einem Display und
- Fig. 2: eine Schnittansicht nach II-II der Fig. 1.

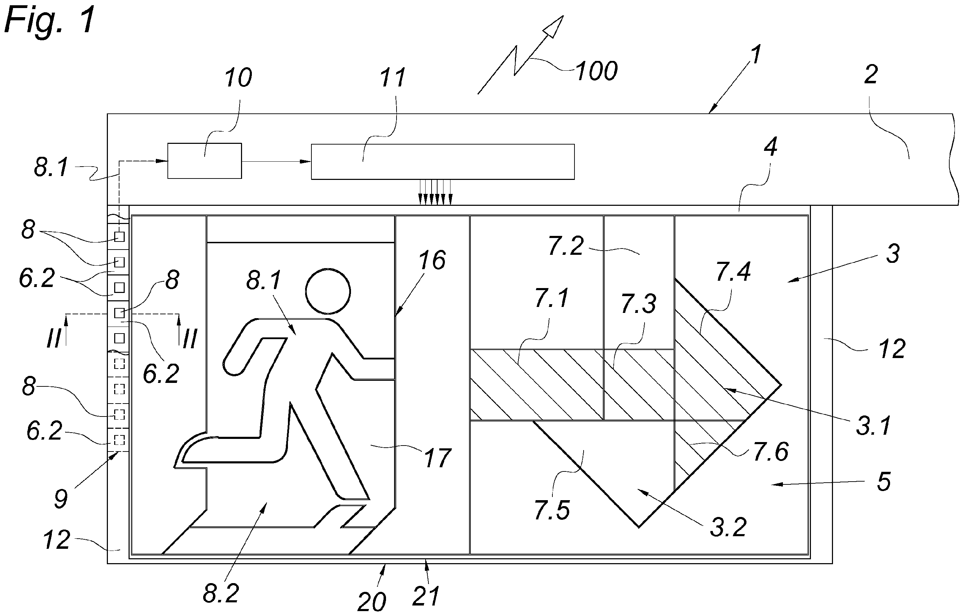

Nach Fig. 1 wird beispielsweise eine Rettungszeichenleuchte 1 einer Not- bzw. Sicherheitsbeleuchtungsanlage 100 dargestellt, welche Rettungszeichenleuchte 1 beispielsweise über eine drahtlose Verbindung mit einer nicht näher dargestellten Not- bzw. Sicherheitsbeleuchtungszentrale verbunden ist.

Die Rettungszeichenleuchte 1 kann über eine Halterung 2 an einer nicht näher dargestellten Wand oder Decke befestigt werden - wobei auch andere Befestigungen der Rettungszeichenleuchte 1 vorstellbar sind.

Diese Rettungszeichenleuchte 1 ist zur Darstellung von sicherheitskritischen Informationen 3 ausgebildet - im Ausführungsbeispiel die Richtung eines Fluchtwegs durch Richtungspfeile 3.1, 3.2. Hierfür weist die Rettungszeichenleuchte 1 ein elektronisches Display 4 auf, das an der Rettungszeichenleuchte 1 einen ersten, optisch veränderbaren Anzeigebereich 5 ausbildet - optisch veränderbar dahingehend, dass zwischen den Richtungspfeile 3.1, 3.2 umgeschaltet werden kann. So ist nach Fig. 1 der eingeschaltete Richtungspfeil 3.1 mit Schraffierung, der nicht eingeschaltete Richtungspfeil 3.2 ohne Schraffierung dargestellt. Dieser erste, optisch veränderbare Anzeigebereich 5 ist sohin zur Darstellung unterschiedlicher, insbesondere sicherheitskritischer, Informationen ausgebildet.

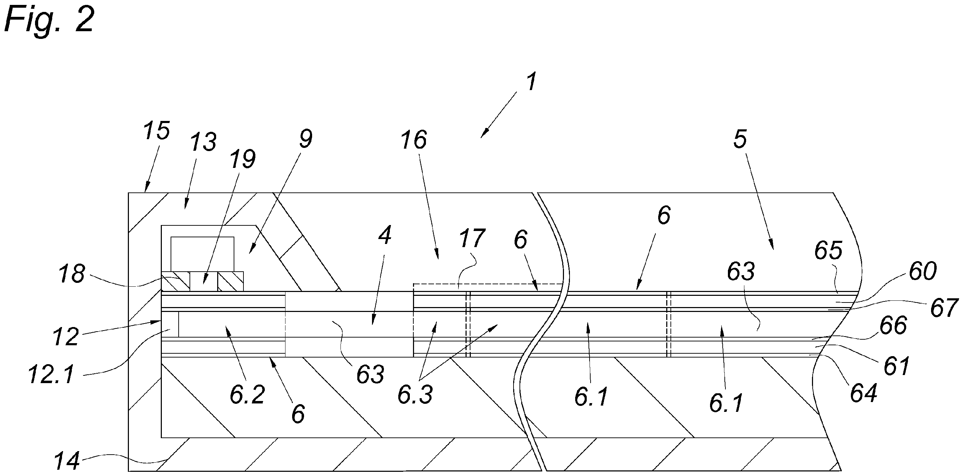

Hierfür weist das elektronische Display 4 mehrere Zellen 6 - nämlich LCD-Zellen - auf, die Anzeigesegmente 7.1, 7.2, 7,3, 7.4, 7.5 und 7.6 im ersten Anzeigebereich 5 ausbilden, was in der Zusammenschau von Fig. 1 und Fig. 2 zu erkennen ist. Mit entsprechender Ansteuerung der ersten Anzeigesegmente 7.1, 7.2, 7,3, 7.4, 7.5 und 7.6 kann der jeweilige gewünschte Richtungspfeile 3.1, 3.2 angezeigt werden. Andere graphische Elemente sind natürlich vorstellbar, beispielsweise ein rotes Kreuz zum Durchstreichen von Richtungspfeilen etc., was nicht näher dargestellt worden ist.

Solch eine LCD-Zelle kann im einfachsten Fall zwei Glasplatten 60, 61, mit einer zwischen den Glasplatten 60, 61 vorgesehenen Flüssigkristallsubstanz 63, Polarisatoren 64, 65 und Elektroden 66, 67 zur Ansteuerung der Zelle aufweisen. Polarisatoren 64, 65 und Elektroden 66, 67 sind bekanntermaßen als Beschichtung auf den Glasplatten 60, 61 vorgesehen.
Die LCD-Zellen können beispielsweise vom Typ TN, STN, FSTN, PVA oder IPS sein. Im Allgemeinen wird erwähnt, dass neben den LCD-Zellen auch OLED-Zellen, QLED-Zellen etc. vorstellbar sind. Im Allgemeinen wird erwähnt, dass vorzugsweise die LCD-Zellen vom Typ TN sind.

Des Weiteren weist die Rettungszeichenleuchte 1 mehrere Sensoren 8 auf, wie dies anhand der Fig. 1 zu erkennen ist. Erfindungsgemäß dienen die Sensoren 8 zur Überwachung des elektronischen Displays 4, damit die Rettungszeichenleuchte 1 eine hohe Sicherheitsanforderungsstufe erfüllen kann.

Um die Darstellung von sicherheitskritischer Informationen 3 nicht zu beeinträchtigen, bilden erste Zellen 6.1 der Zellen 6 des Displays 4 den ersten Anzeigebereich 5 und mehrere zweite Zellen 6.2 der Zellen 6 des Displays 4 einen vom ersten Anzeigebereich 5 getrennt angeordneten Kontrollbereich 9 aus. Dieser Kontrollbereich 9 ist bei Sicht auf das Display 4 visuell nicht erkennbar. Mit diesen zweiten Zellen 6.2 ist je ein Sensor 8 optisch gekoppelt, welcher Sensor 8 Sensordaten 8.1 an eine Überwachungsreinrichtung 10 der Rettungszeichenleuchte 1 übermittelt bzw. diese können diese Sensordaten 8.1 auch an eine Zentrale, insbesondere Notbeleuchtungszentrale, übertragen werden (z.B.: auch über eine drahtlose Verbindung).

Derart kann auf die Zuverlässigkeit der Zellen 6 des Displays 4 rückgeschlossen - und folglich kann damit das Display 4 auf seine Funktionstüchtigkeit hin überwacht werden. Beispielsweise kann nämlich davon ausgegangen werden, dass sich Fehler in Ansteuerung der ersten Zellen 6.1 auch auf die sensorüberwachten zweiten Zellen 6.2 auswirken bzw. durch diese zweiten Zellen 6.2 erkennbar werden. Solch eine Auswirkung kann sich insbesondere in einem unerwarteten Timing, einer unerwarteten Helligkeit, unerwarteten Farbe der zweiten Zellen 6.2, abgebildet in den Sensordaten 8.1, bemerkbar machen.
Diese ersten und zweiten Zellen 6.1, 6.2 werden zudem von einer gemeinsamen Ansteuerlogik 11 getrieben, wodurch auch Fehler in der Ansteuerlogik 11 durch Überwachung der zweiten Zellen 6.2 erkennbar werden.

Wie in der Fig. 1 zu erkennen ist der Kontrollbereich 9 im linken Randbereich 12 des Displays 4 vorgesehen, und zwar im Bereich des Trenners/Abstandhalters 12.1 der beiden Glasplatten 60, 61 im aktiven Bereich des Displays 4. Der Kontrollbereich 9 ist lichtundurchlässig von einer Blende 13 abgedeckt. Andere lichtundurchlässige Abdeckungen beispielsweise Lacke etc., sind vorstellbar.
Diese, das Display 4 umlaufende Blende 13 wird vom Gehäuse 14 ausgebildet - was in Fig. 2 erkennbar ist. Die Blende 13 bildet auch den linken, rechten und unteren Seitenrand 15 der Rettungszeichenleuchte 1 aus und fasst das Display 4 ein. Mit dieser Einfassung 20 erstreckt sich sohin das Display 4 über die gesamte Sichtseite 21 bzw. Breitseite der Rettungszeichenleuchte 1, an welcher Sichtseite 21 die, insbesondere sicherheitskritische, Information dargestellt wird. Die Konstruktion der Rettungszeichenleuchte 1 wird dadurch erheblich vereinfacht.

Die Rettungszeichenleuchte 1 weist zusätzlich zum ersten Anzeigebereich 5 einen zweiten optisch unveränderbaren Anzeigebereich 16 auf. Dieser der optisch unveränderbare Anzeigebereich 16 wird von Zellen 6 des Displays 4 ausgebildet wird, nämlich von dritten Zellen 6.3. Diese dritten Zellen 6.3 bilden im zweiten Anzeigebereich 16 zweite Anzeigesegmente 8.1, 8.2 aus, die optisch unveränderbar das gleiche darstellen, was auch vom am Display 4 aufgebrachten Piktogramm 17 optisch zu erkennen ist.
Der zweite, optisch unveränderbare Anzeigebereich 16 ist sohin zur Darstellung stets dergleichen, insbesondere sicherheitskritischer, Information ausgebildet.

Der zweite, optisch unveränderbare Anzeigebereich 16 kann aber auch von einem auf das Display 4 aufgebrachten Piktogramm 17 ausgebildet werden, wie dies strichliert in Fig. 2 dargestellt worden ist.

Dieser zweite Anzeigebereich 16 ist zwischen Kontrollbereich 9 und ersten Anzeigebereich 5 vorgesehen, welche Bereiche 5, 9 und 16 direkt nebeneinander vorgesehen sind - wie dies in Fig. 1 zu erkennen ist.

Außerdem ist in Fig. 1 der optische Pfad zwischen einem Sensor 8 und einer zweiten Zelle 6.2 zu erkennen. Hierzu ist der Sensor 8 auf dem Display 4 über einer zweiten Zelle 6.2 vorgesehen.
Alle Sensoren 8 auf einem gemeinsamen Träger 18, der als Platine ausgebildet ist. Die Platine dient auch zur Signalanbindung der Sensoren. Dieser Träger 18 ist auf dem Display 4 über eine Verklebung angeordnet und weist für jeden Sensor 8 im Bereich der zweiten Zelle 6.2 je eine Aussparung 19 auf. Über diese Aussparungen 19 sind die Sensoren 8 mit der jeweiligen zweiten Zelle 6.2 optisch gekoppelt.

Die Anzahl an zweiten Zellen 6.2 ist so gewählt, dass eine eindeutige Zuordnung der von den ersten Zellen 6.1 darstellbaren Informationen über den Zustand der zweiten Zellen 6.2 möglich ist. Nach Fig. 1 wird der optisch veränderbaren Anzeigebereich 5 durch sechs, erste Anzeigesegmente 7.1, 7.2, 7,3, 7.4, 7.5 und 7.6 gebildet. Im Falle einer binärkodierten Zustandsanzeige der zweiten Zellen 6.2 bedarf es daher drei, zweite Zellen 6.2 um diese sechs, erste Zellen 6.1 zu überwachen. Damit wird die Bedingung 2^{Anzahl an zweiten Zellen 62} ≥ Anzahl an ersten Zellen 6.1 erfüllt.
Zudem ist es damit aufgrund des Zustands der zweiten Zellen 6.2 nun auch möglich, eine eindeutige Zuordnung der von den ersten Zellen 6.1 dargestellten Information zu erlangen bzw. diese auch auf Richtigkeit zu überprüfen.
Damit kann die Funktionsfähigkeit des elektronischen Displays auf Funktionstüchtigkeit überprüft werden, was eine hohe Sicherheitsanforderungsstufe ermöglicht.

## Patentansprüche

1. Sicherheits- oder Rettungszeichenleuchte mit einem elektronischen Display (4), welches Zellen (6), insbesondere LCD-Zellen, aufweist und damit an der Sicherheits- oder Rettungszeichenleuchte (1) einen ersten, optisch veränderbaren Anzeigebereich (5) zur Darstellung von, insbesondere sicherheitskritischer, Information ausbildet, und mit einem Sensor (8), **dadurch gekennzeichnet, dass** von den Zellen (6) des Displays (4) erste Zellen (6.1) den ersten Anzeigebereich (5) und mindestens eine zweite Zelle (6.2) einen vom ersten Anzeigebereich (5) getrennt angeordneten Kontrollbereich (9) ausbilden, welcher Kontrollbereich (9) bei Sicht auf das Display (4) visuell nicht erkennbar ist und dessen zweite Zelle (6.2) mit dem Sensor (8) zur Überwachung des elektronischen Displays (4) optisch gekoppelt ist.

2. Sicherheits- oder Rettungszeichenleuchte nach Anspruch 1, **dadurch gekennzeichnet, dass** der Sensor (8) auf dem Display (4) über der zweiten Zelle (6.2) vorgesehen ist.

3. Sicherheits- oder Rettungszeichenleuchte nach Anspruch 1 oder 2, **dadurch gekennzeichnet, dass** der Kontrollbereich (9) in einem seitlichen Randbereich (12) des Displays (4) vorgesehen ist.

4. Sicherheits- oder Rettungszeichenleuchte nach Anspruch 1, 2 oder 3, **dadurch gekennzeichnet, dass** die zweite Zelle (6.2) lichtundurchlässig, insbesondere von einer Blende (13) und/oder vom Sensor (8), abgedeckt ist.

5. Sicherheits- oder Rettungszeichenleuchte nach Anspruch 4, **dadurch gekennzeichnet, dass** die Blende (13) wenigstens abschnittsweise den Seitenrand (15) der Sicherheits- oder Rettungszeichenleuchte (1) ausbildet.

6. Sicherheits- oder Rettungszeichenleuchte nach einem der Ansprüche 1 bis 5, **dadurch gekennzeichnet, dass** die ersten Zellen (6.1) erste Anzeigesegmente (7.1, 7.2, 7,3, 7.4, 7.5, 7.6) im ersten Anzeigebereich (5) ausbilden.

7. Sicherheits- oder Rettungszeichenleuchte nach einem der Ansprüche 1 bis 6, **dadurch gekennzeichnet, dass** die Sicherheits- oder Rettungszeichenleuchte (1) zusätzlich zum ersten Anzeigebereich (5) einen zweiten, optisch unveränderbaren Anzeigebereich (16) zur Darstellung von, insbesondere sicherheitskritischer, Information aufweist.

8. Sicherheits- oder Rettungszeichenleuchte nach Anspruch 7, **dadurch gekennzeichnet, dass** von den Zellen (6) des Displays (4) mindestens eine dritte Zelle (6.3) den zweiten Anzeigebereich (16) ausbildet.

9. Sicherheits- oder Rettungszeichenleuchte nach Anspruch 8, **dadurch gekennzeichnet, dass** mehrere dritte Zellen (6.3) zweite Anzeigesegmente (8.1, 8.2) im zweiten Anzeigebereich (16) ausbilden.

10. Sicherheits- oder Rettungszeichenleuchte nach Anspruch 7, 8 oder 9, **dadurch gekennzeichnet, dass** der zweite Anzeigebereich (16) ein Piktogramm (17) aufweist, insbesondere davon gebildet wird.

11. Sicherheits- oder Rettungszeichenleuchte nach einem der Ansprüche 7 bis 10, **dadurch gekennzeichnet, dass** der zweite Anzeigebereich (16) zwischen Kontrollbereich (9) und erstem Anzeigebereich (5) vorgesehen ist.

12. Sicherheits- oder Rettungszeichenleuchte nach einem der Ansprüche 7 bis 11, **dadurch gekennzeichnet, dass** der erste und zweite Anzeigebereich (5, 16) aneinander anschließen.

13. Sicherheits- oder Rettungszeichenleuchte nach einem der Ansprüche 1 bis 12, **dadurch gekennzeichnet, dass** die Sicherheits- oder Rettungszeichenleuchte (1) eine dem Display (4) zugehörige Ansteuerlogik (11) aufweist, welche die ersten und zweiten Zellen (6.1, 6.2) des Displays (4) treibt.

14. Sicherheits- oder Rettungszeichenleuchte nach einem der Ansprüche 1 bis 13, **dadurch gekennzeichnet, dass** der Sensor (8) auf einem Träger (18) vorgesehen ist, der auf dem Display (4) angeordnet im Bereich der zweiten Zelle (6.2) eine Aussparung (19) aufweist, über die der Sensor (8) mit der zweiten Zelle (6.2) optisch gekoppelt ist.

15. Sicherheits- oder Rettungszeichenleuchte nach einem der Ansprüche 1 bis 14, **dadurch gekennzeichnet, dass** sich das elektronische Display (4) gegebenenfalls mit einer Einfassung (20) über die gesamte Sichtseite (21) der Sicherheits- oder Rettungszeichenleuchte (1) erstreckt.

16. Sicherheits- oder Rettungszeichenleuchte nach einem der Ansprüche 1 bis 15, **dadurch gekennzeichnet, dass** aufgrund des, insbesondere codiert dargestellten, Zustands der zweiten Zellen (6.2) eine eindeutige Zuordnung der von den ersten Zellen (6.1) dargestellten Information möglich ist.

17. Sicherheits- oder Rettungszeichenleuchte nach einem der Ansprüche 1 bis 16, **dadurch gekennzeichnet, dass** 2 hoch der Anzahl an zweiten Zellen (6.2) ≥ der Anzahl an ersten Zellen (6.1) ist.

18. Sicherheitsbeleuchtungsanlage mit einer Sicherheits- oder Rettungszeichenleuchte nach einem der Ansprüche 1 bis 17.

## Claims

1. Safety or rescue signal light, having an electronic display (4) which has cells (6), more particularly LCD cells, and thus forms on the safety or rescue signal light (1) a first, optically variable display region (5) for displaying, more particularly safety-critical, information, and having a sensor (8), **characterized in that** of the cells (6) of the display (4), first cells (6. 1) form the first display area (5) and at least one second cell (6.2) forms a control area (9) arranged separately from the first display area (5), which control area (9) is not visually recognizable when looking at the display (4) and whose second cell (6.2) is optically coupled to the sensor (8) for monitoring the electronic display (4).

2. Safety or rescue signal light according to claim 1, **characterized in that** the sensor (8) is provided on the display (4) above the second cell (6.2).

3. Safety or rescue signal light according to claim 1 or 2, **characterized in that** the control area (9) is provided in a side edge area (12) of the display (4).

4. Safety or rescue signal light according to claim 1, 2 or 3, **characterized in that** the second cell (6.2) is opaque, more particularly covered by a screen (13) and/or by the sensor (8).

5. Safety or rescue signal light according to claim 4, **characterized in that** the screen (13) forms the side edge (15) of the safety or rescue signal light (1) at least in sections.

6. Safety or rescue signal light according to one of claims 1 to 5, **characterized in that** the first cells (6.1) form first display segments (7.1, 7.2, 7.3, 7.4, 7.5, 7.6) in the first display area (5).

7. Safety or rescue signal light according to one of claims 1 to 6, **characterized in that** the safety or rescue signal light (1) comprises, in addition to the first display area (5), a second, optically unchangeable display area (16) for displaying, more particularly safety-critical, information.

8. Safety or rescue signal light according to claim 7, **characterized in that** of the cells (6) of the display (4), at least one third cell (6.3) forms the second display area (16).

9. Safety or rescue signal light according to claim 8, **characterized in that** several third cells (6.3) form second display segments (8.1, 8.2) in the second display area (16).

10. Safety or rescue signal light according to claim 7, 8 or 9, **characterized in that** the second display area (16) has a pictogram (17), more particularly is formed by it.

11. Safety or rescue signal light according to one of claims 7 to 10, **characterized in that** the second display area (16) is provided between the control area (9) and the first display area (5).

12. Safety or rescue signal light according to one of claims 7 to 11, **characterized in that** the first and second display areas (5, 16) adjoin one another.

13. Safety or rescue signal light according to one of claims 1 to 12, **characterized in that** the safety or rescue signal light (1) comprises a drive logic (11) which is associated with the display (4) and drives the first and second cells (6.1, 6.2) of the display (4).

14. Safety or rescue signal light according to one of claims 1 to 13, **characterized in that** the sensor (8) is provided on a carrier (18) which, arranged on the display (4), has a cutout (19) in the region of the second cell (6.2), via which cutout (19) the sensor (8) is optically coupled to the second cell (6.2).

15. Safety or rescue signal light according to one of claims 1 to 14, **characterized in that** the electronic display (4) optionally extends with an enclosure (20) over the entire visible side (21) of the safety or rescue signal light (1).

16. Safety or rescue signal light according to one of claims 1 to 15, **characterized in that** an unambiguous assignment of the information displayed by the first cells (6.1) is possible on the basis of the state, more particularly displayed in coded form, of the second cells (6.2).

17. Safety or rescue signal light according to one of claims 1 to 16, **characterized in that** 2 to the power of the number of second cells (6.2) is ≥ the number of first cells (6.1).

18. Safety lighting system, comprising a safety or rescue signal light according to one of claims 1 to 17.

## Revendications

1. Luminaire de signalisation de sécurité ou de secours avec un afficheur électronique (4) qui présente des cellules (6), en particulier des cellules LCD, et forme ainsi sur le luminaire de signalisation de sécurité ou de secours (1) une première zone d'affichage (5) optiquement variable pour la représentation d'informations, en particulier critiques pour la sécurité, et avec un capteur (8), **caractérisé en ce que** parmi les cellules (6) de l'afficheur (4), des premières cellules (6.1) forment la première zone d'affichage (5) et au moins une deuxième cellule (6.2) forme une zone de contrôle (9) disposée séparément de la première zone d'affichage (5), laquelle zone de contrôle (9) n'est pas visible lorsque l'on regarde l'afficheur (4) et dont la deuxième cellule (6.2) est couplée optiquement au capteur (8) pour surveiller l'afficheur électronique (4).

2. Luminaire de signalisation de sécurité ou de secours selon la revendication 1, **caractérisé en ce que** le capteur (8) est prévu sur l'afficheur (4) au-dessus de la deuxième cellule (6.2).

3. Luminaire de signalisation de sécurité ou de secours selon la revendication 1 ou 2, **caractérisé en ce que** la zone de contrôle (9) est prévue dans une zone de bord latéral (12) de l'afficheur (4).

4. Luminaire de signalisation de sécurité ou de secours selon la revendication 1, 2 ou 3, **caractérisé en ce que** la deuxième cellule (6.2) est recouverte de manière opaque, en particulier par un cache (13) et/ou par le capteur (8).

5. Luminaire de signalisation de sécurité ou de secours selon la revendication 4, **caractérisé en ce que** le cache (13) forme le bord latéral (15) du luminaire de signalisation de sécurité ou de secours (1) au moins sur certaines parties.

6. Luminaire de signalisation de sécurité ou de secours selon l'une des revendications 1 à 5, **caractérisé en ce que** les premières cellules (6.1) forment des premiers segments d'affichage (7.1, 7.2, 7.3, 7.4, 7.5, 7.6) dans la première zone d'affichage (5).

7. Luminaire de signalisation de sécurité ou de secours selon l'une des revendications 1 à 6, **caractérisé en ce que** le luminaire de signalisation de sécurité ou de secours (1) présente, en plus de la première zone d'affichage (5), une deuxième zone d'affichage (16) optiquement invariable pour la représentation d'informations, en particulier critiques pour la sécurité.

8. Luminaire de signalisation de sécurité ou de secours selon la revendication 7, **caractérisé en ce que** parmi les cellules (6) de l'afficheur (4), au moins une troisième cellule (6.3) forme la deuxième zone d'affichage (16).

9. Luminaire de signalisation de sécurité ou de secours selon la revendication 8, **caractérisé en ce que** plusieurs troisièmes cellules (6.3) forment des deuxièmes segments d'affichage (8.1, 8.2) dans la deuxième zone d'affichage (16).

10. Luminaire de signalisation de sécurité ou de secours selon la revendication 7, 8 ou 9, **caractérisé en ce que** la deuxième zone d'affichage (16) présente un pictogramme (17), en particulier est formée par celui-ci.

11. Luminaire de signalisation de sécurité ou de secours selon l'une des revendications 7 à 10, **caractérisé en ce que** la deuxième zone d'affichage (16) est prévue entre la zone de contrôle (9) et la première zone d'affichage (5).

12. Luminaire de signalisation de sécurité ou de secours selon l'une des revendications 7 à 11, **caractérisé en ce que** les première et deuxième zones d'affichage (5, 16) sont adjacentes l'une à l'autre.

13. Luminaire de signalisation de sécurité ou de secours selon l'une des revendications 1 à 12, **caractérisé en ce que** le luminaire de signalisation de sécurité ou de secours (1) présente une logique de commande (11) qui est associée à l'afficheur (4) et qui pilote les première et deuxième cellules (6.1, 6.2) de l'afficheur (4).

14. Luminaire de signalisation de sécurité ou de secours selon l'une des revendications 1 à 13, **caractérisé en ce que** le capteur (8) est prévu sur un support (18) qui est disposé sur l'afficheur (4) et qui présente, dans la zone de la deuxième cellule (6.2), un évidement (19) par lequel le capteur (8) est couplé optiquement à la deuxième cellule (6.2).

15. Luminaire de signalisation de sécurité ou de secours selon l'une des revendications 1 à 14, **caractérisé en ce que** l'afficheur électronique (4) s'étend, éventuellement avec un encadrement (20), sur toute la face visible (21) du luminaire de signalisation de sécurité ou de secours (1).

16. Luminaire de signalisation de sécurité ou de secours selon l'une des revendications 1 à 15, **caractérisé en ce que**, en raison de l'état, en particulier représenté sous forme codée, des deuxièmes cellules (6.2), une affectation univoque des informations représentées par les premières cellules (6.1) est possible.

17. Luminaire de signalisation de sécurité ou de secours selon l'une des revendications 1 à 16, **caractérisé en ce que** 2 à la puissance du nombre de deuxièmes cellules (6.2) est ≥ au nombre de premières cellules (6.1).

18. Système d'éclairage de sécurité comprenant un luminaire de signalisation de sécurité ou de secours selon l'une des revendications 1 à 17.
